# FASCICULE DE BREVET EUROPEEN

(11) **EP 1 449 695 B1**
(45) Date de publication et mention de la délivrance du brevet: **04.05.2011**
(21) Numéro de dépôt: 04364011.9
(22) Date de dépôt: 10.02.2004
(51) Int. Cl.: B60J 1/20

(54) **Store pour véhicule automobile à éléments coulissants montés sur rotule**
Kraftfahrzeugblende mit auf Kugelgelenk angeordnete Schiebeelemente
Motor vehicle blind with ball-joint mounted sliding elements

(30) Priorité: 13.02.2003 FR 0301844
(43) Date de publication de la demande: 25.08.2004
(73) Titulaire: Advanced Comfort Systems France SAS - ACS France, 79300 Bressuire (FR)
(72) Inventeur: Moreau, Stéphane, 49300 Le Puy Saint Bonnet (FR)
(74) Mandataire: Bioret, Ludovic

(56) Documents cités:
- US-A- 5 201 810
- US-A- 5 404 926
- US-A1- 2002 060 469

## Description

Le domaine de l'invention est celui des stores, notamment pour véhicule automobile. Plus précisément, l'invention concerne les stores à écran amovible, destiné à être déployé pour occulter une baie non rectangulaire, et circulant dans une fente, ménagée par exemple dans la tablette arrière d'un véhicule, ou dans un boîtier prévu à cet effet.

Classiquement, un store à enrouleur présente une toile, ou rideau, formant écran, en position déployée, devant une baie vitrée. La toile est susceptible d'être déroulée ou enroulée au travers d'une fente ménagée dans l'habillage intérieur ou la tablette arrière d'un véhicule.

Une des extrémités de la toile est montée sur un rouleau, ou tube enrouleur, mobile en rotation. L'autre extrémité de la toile est munie d'une barre de tirage.

Selon une technique particulière, à laquelle s'applique l'invention, la barre de tirage est solidaire de deux patins reliés ou montés à ses extrémités, et qui circulent dans des rails pour guider la barre de tirage, et par conséquent la toile d'occultation, entre sa position déployée et sa position repliée. Ce déplacement peut être manuel ou motorisé.

En position repliée, la toile est essentiellement enroulée autour du tube d'enroulement, et la barre de tirage vient, par exemple, en appui sur l'habillage intérieur ou sur la tablette arrière du véhicule.

Dans de nombreux cas, et par exemple pour les vitres arrière de la plupart des véhicules actuels, la baie, et par voie de conséquence la toile, présentent une forme non rectangulaire, et souvent trapézoïdale. La forme de la toile peut plus généralement être quelconque, notamment en fonction de la forme de la baie à occulter. Plus précisément, le côté de la toile relié au rouleau (par exemple la base du trapèze) est souvent plus grand que le côté relié à la barre de tirage.

Selon la technique à laquelle s'applique l'invention, les rails ne sont eux-mêmes pas parallèles. On prévoit alors des éléments coulissants, solidaires des patins et pouvant se déplacer en translation par rapport au corps de la barre de tirage. On forme ainsi une barre de tirage télescopique, s'adaptant à l'écartement variable des rails comme connue, par exemple, par les documents US 5 201 810 et

US 5 404 926 divulguant les caractéristiques du préambule de la revendication 1.

Un des problèmes rencontrés avec cette technique et que, dans certaines situations, le coulissement des éléments coulissants, et/ou celui des patins peut s'avérer difficile du fait par exemple des jeux dus au montage et aux tolérances. Il peut en effet y avoir des jeux relativement importants, par exemple dans le montage des rails.

Ces difficultés de coulissement peuvent être encore plus importantes dans le cas de rails galbés. Ils peuvent également apparaître ou augmenter au cours du temps, ou encore lorsque le véhicule est en mouvement.

L'invention a notamment pour objectif de pallier ces inconvénients de l'art antérieur.

Plus précisément, un objectif de l'invention est de fournir un store pour véhicule automobile guidé par rails non parallèles, qui offrent de bonnes qualités de déplacement de la barre lors du déploiement et du repliement de la toile.

Notamment, un objectif de l'invention est de fournir un tel store, offrant de bonnes tolérances aux jeux éventuels pouvant apparaître.

Un autre objectif de l'invention est de fournir un tel store, qui soit facile à fabriquer et à monter, à un coût relativement réduit.

Encore un autre objectif de l'invention est de fournir un tel store qui soit le plus possible silencieux, et notamment qui ne génère pas de bruit dû à des difficultés de coulissement.

Ces objectifs, ainsi que d'autres qui apparaîtront par la suite sont atteints à l'aide d'un store pour véhicule automobile présentant une barre de tirage guidée dans deux rails non parallèles et permettant l'enroulement et le déroulement d'un écran d'occultation, ladite barre de tirage comprenant un élément central et au moins un élément coulissant par rapport à ce dernier, de façon à compenser la variation de l'écartement entre lesdits rails. Selon l'invention, l'extrémité dudit élément coulissant relié audit élément central présente une section de surface plus importante que le reste dudit élément coulissant, en forme de sphère tronquée, assurant une liaison formant rotule, de façon à autoriser un débattement de compensation d'une éventuelle absence de parallélisme entre ledit élément coulissant et ledit élément central.

Ainsi, on pallie de façon simple et efficace aux problèmes de parallélisme et de jeux, et on permet de conserver une bonne qualité de coulissement dans la plupart des circonstances.

Préférentiellement, ledit élément coulissant circule dans un logement dont la section est complémentaire de ladite section de l'extrémité reliée audit élément central.

Selon un aspect avantageux, ladite extrémité reliée audit élément central assure une fonction de butée, dans au moins une des positions extrêmes de coulissement.
dans un mode de réalisation particulier de l'invention, chacun desdits éléments coulissants porte un enjoliveur prévu pour recouvrir une portion d'extrémité d'une fente de passage dudit écran.

Dans ce cas, ledit enjoliveur coopère avantageusement avec des moyens de limitation dudit débattement.

Selon un mode de réalisation particulier de l'invention, ledit élément coulissant est relié audit élément central par des moyens de rappel, comprenant par exemple un ressort spiral.

L'invention concerne également les véhicules automobiles comprenant au moins un store tel que décrit ci-dessus.

D'autres caractéristiques et avantages de l'invention apparaîtront plus clairement à la lecture de la description suivante d'un mode de réalisation préférentiel, donné à titre de simple exemple illustratif et non limitatif, et des dessins annexés parmi lesquels :
- les figures 1A et 1B illustrent schématiquement un store à toile trapézoïdale, respectivement en position déployée et en position repliée, mettant en oeuvre la technique de l'invention ;

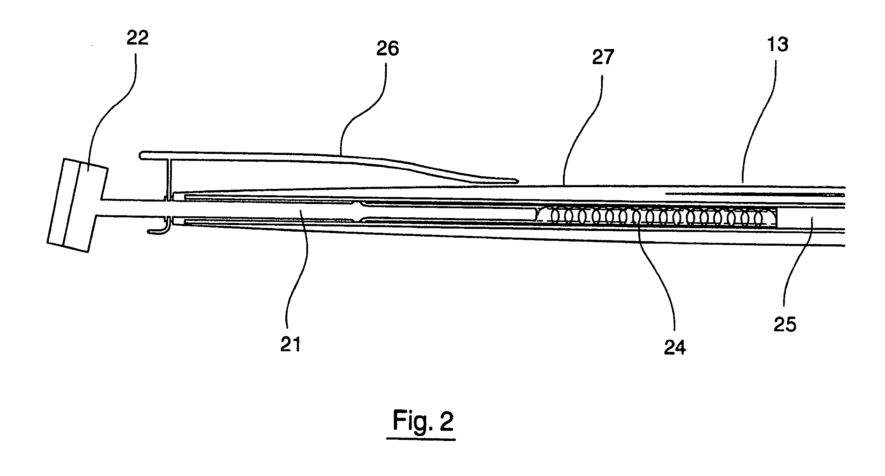

- la figure 2 est une vue en coupe d'une partie de la barre de tirage du store des figures 1A et 1B, et d'un des éléments coulissants selon l'invention ;
- les figures 3 et 4 présentent plus précisément le système de l'invention, en perspective, respectivement lorsque le store est en position dépliée et en position repliée.

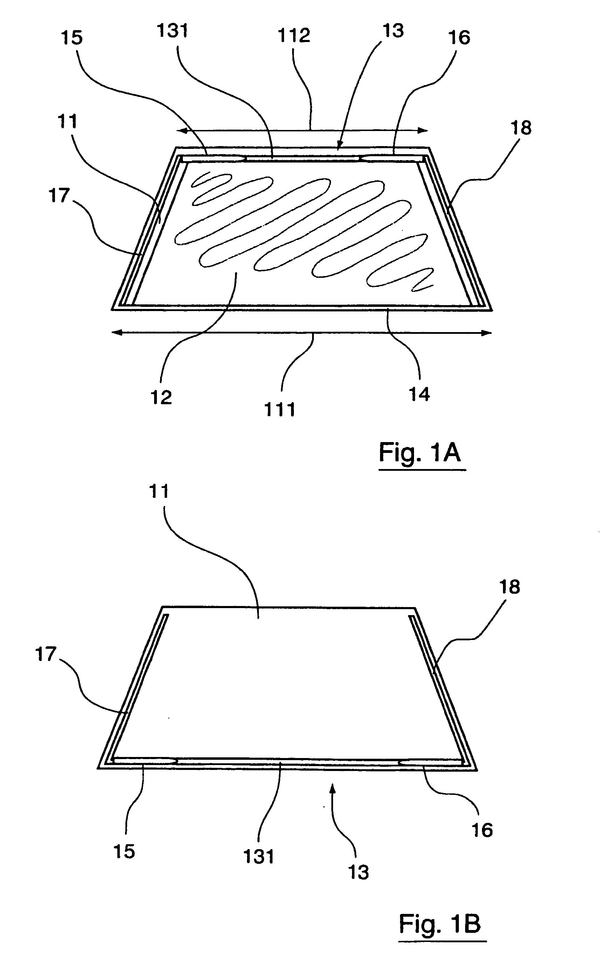

L'invention concerne donc un store destiné à occulter une surface vitrée d'un véhicule automobile qui est non rectangulaire, et par exemple trapézoïdale, ainsi que cela est illustré par les figures 1A et 1B. Sur ces figures, on a représenté une vitre arrière d'un véhicule, de forme trapézoïdale, le côté inférieur 111 étant de largeur supérieure à la largeur de côté supérieur 112.

Pour occulter de façon optimale cette surface vitrée trapézoïdale, la toile 12 doit bien sûr avoir une forme similaire. Cela suppose que la barre de tirage est d'une longueur correspondant à celle du petit côté du trapèze, définie par la toile, alors que la fente 14 permettant le passage de la toile sous la tablette arrière doit avoir une longueur correspondant à la largeur du grand côté de ce trapèze.

La barre de tirage 13 est solidaire de patins circulant dans des rails 17, 18 montés sur la structure et/ou la garniture du véhicule. Ces rails 17 et 18 suivent également la forme trapézoïdale de la vitre, et ne sont donc pas parallèles. La variation d'écartement entre ces rails est compensée, de façon connue, par l'utilisation d'éléments d'extrémité coulissants, pour former une barre télescopique.

Le principe est de former un ensemble télescopique, de façon à absorber les variations de longueur que doit prendre la barre de tirage lors de son évolution entre deux rails 17 et 18 non parallèles, tout en conservant la symétrie de l'ensemble du système.

Cet ensemble télescopique comprend donc la barre de tirage 13, ou plus précisément le corps principal 131 de la barre de tirage, à l'intérieur de laquelle, deux embouts coulissants 21 sont montés. L'extrémité extérieure de cet embout coulissant 21 est fixée, ou intègre un patin 22 (ou un élément similaire fonctionnellement, comme une roulette), prévu pour coulisser dans l'un des rails. L'autre extrémité pénètre à l'intérieur d'un logement 31 prévu à cet effet dans la barre de tirage 13.

Le coulissement des embouts coulissants 21 peut être libre, et guidé simplement par les rails 17 et 18. Avantageusement cependant, on prévoit des moyens de rappel visant à assurer la transmission des efforts, ainsi que le plaquage des patins 22 dans les rails 17 et 18, de façon notamment à éviter les bruits de frottement.

On peut ainsi prévoir un ressort 24 monté entre un tampon central 25 prévu dans la barre de tirage 13 et chaque embout 21. Ce tampon central 25 permet d'équilibrer les efforts transmis par les deux ressorts. On peut également prévoir un ressort unique reliant les deux embouts (le tampon central 25 étant alors supprimé).

Le logement 31 prévu à l'intérieur du corps de la barre 13 contient donc le tampon central 25 et les ressorts 24, ainsi qu'une portion des embouts de tirage 21, dont l'autre extrémité est reliée aux patins de tirage 22. Les patins de tirage 22 sont entraînés en translation par exemple par des câbles de commande du store, et la longueur formée par la barre de tirage 13 et les embouts 21 s'ajuste automatiquement, par le coulissement de ces embouts 21 dans le logement 31. Les ressorts 24 et le tampon 25 équilibrent les efforts.

On comprend que, du fait par exemple des tolérances nécessaires dans le domaine de l'automobile, l'élément coulissant (ou embout) 21 peut avoir des difficultés à coulisser en restant parfaitement parallèle à la barre de tirage 13. Cela peut conduire à des blocages, ou à tout le moins à des perturbations du déroulement ou de l'enroulement de la toile.

Selon l'invention, on prévoit donc des moyens autorisant un certain jeu dans le parallélisme de l'embout coulissant 21. Ainsi, le déplacement des patins 22 peut s'effectuer dans de bonnes conditions, même lorsqu'il y a des jeux.

Pour obtenir ce résultat, l'extrémité 211 de l'embout 21 opposée au patin 22 (c'est-à-dire l'extrémité reliée au corps de la, barre de tirage 13, par l'intermédiaire du ressort 24 dans l'exemple décrit) présente une section supérieure à celle du reste de l'élément coulissant, qui est préférentiellement tubulaire.

L'extrémité 211 a par exemple une forme de sphère tronquée. Le logement 31 défini dans le corps de la barre 13 est bien sûr adapté pour permettre le coulissement sphérique 211. Cette dernière assure donc une fonction de rotule. Ainsi, l'embout 21 peut se déplacer légèrement par rapport à l'axe de la barre de tirage 13, de quelques degrés, et ainsi compenser les jeux éventuels.

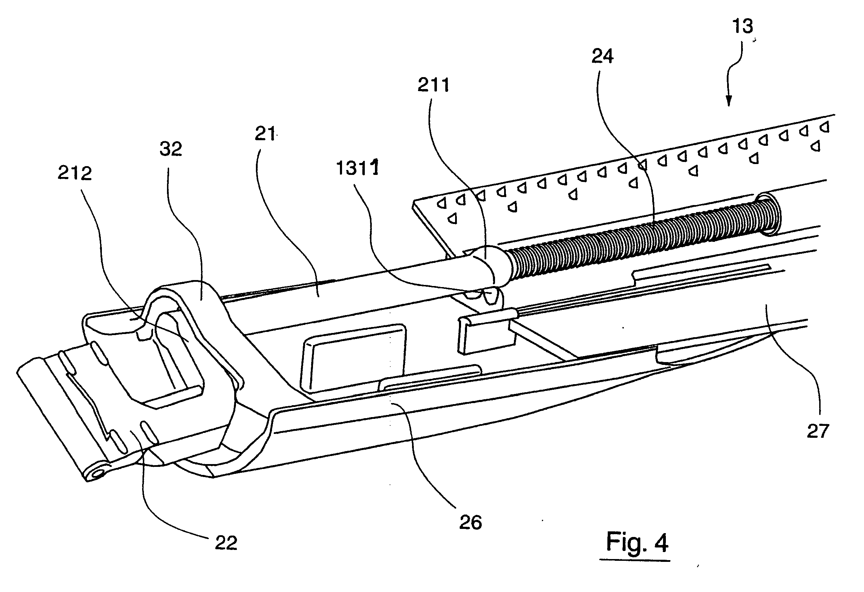

Comme cela apparaît sur la figure 4, la rotule 211 peut également assurer une fonction de butée, en venant en appui contre un élément 131 prévu à cet effet de l'enjoliveur principal 27.

On notera que, préférentiellement, l'embout 21 porte un enjoliveur 26, prévu pour coulisser par rapport à l'enjoliveur principal 27 de la barre de tirage, de façon à recouvrir intégralement la fente de passage de la toile, lorsque le store est en position repliée, et à venir chevaucher l'enjoliveur principal (pour réduire la longueur de l'ensemble de tirage (en position dépliée).

L'enjoliveur 26 est clipsé sur l'embout 21.

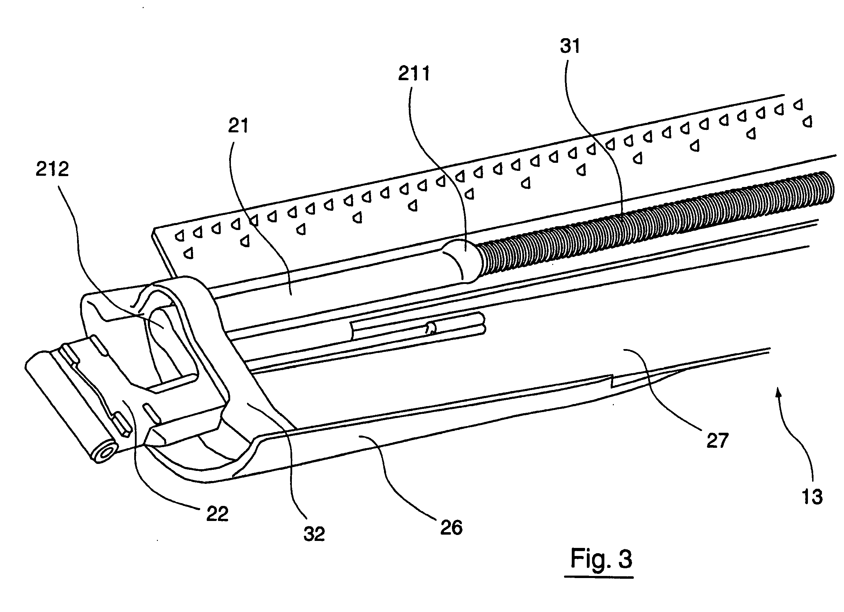

Selon le mode de réalisation illustré sur les figures 3 et 4, on note que le patin 22 est solidarisé à l'embout de façon déportée, à l'aide d'une portion 212 s'étendant perpendiculairement à l'axe de coulissement. Une pièce 32 montée sur l'enjoliveur 26 permet de définir un débattement angulaire pour le patin 22 (voir figure 3 et figure 4 respectivement).

Bien sûr, la portion 212 n'est pas obligatoire, et le patin 22 pourra être monté directement dans le prolongement de l'axe de coulissement.

Par ailleurs, bien sûr, l'effet de rotule peut être obtenu par d'autres formes que celles illustrées sur les figures.

On notera également que le ressort 24 n'est pas un élément obligatoire. L'embout 21 pourrait être relié directement à l'élément fixe, adapté pour permettre l'effet de rotule, et autoriser le débattement nécessaire.

## Revendications

1. Store pour véhicule automobile présentant une barre de tirage (13) guidée dans deux rails non parallèles (17, 18) et permettant l'enroulement et le déroulement d'un écran d'occultation (12),
ladite barre de tirage (13) comprenant un élément central (131) et au moins un élément coulissant (15, 16) par rapport à ce dernier, de façon à compenser la variation de l'écartement entre lesdits rails (17, 18),
**caractérisé en ce que** l'extrémité (211) dudit élément coulissant (15, 16) reliée audit élément central (131) présente une section de surface plus importante que le reste dudit élément coulissant (15, 16), en forme de sphère tronquée, assurant une liaison formant rotule, de façon à autoriser un débattement de compensation d'une éventuelle absence de parallélisme entre ledit élément coulissant (15, 16) et ledit élément central (131).

2. Store selon la revendication 1, **caractérisé en ce que** ledit élément coulissant (15, 16) circule dans un logement (31) dont la section est complémentaire de ladite section de l'extrémité (211) reliée audit élément central (131).

3. Store selon l'une quelconque des revendications 1 ou 2, **caractérisé en ce que** ladite extrémité (211) reliée audit élément central (131) assure une fonction de butée, dans au moins une des positions extrêmes de coulissement.

4. Store selon l'une quelconque des revendications 1 à 3, **caractérisé en ce que** chacun desdits éléments coulissants (15, 16) porte un enjoliveur (26) prévu pour recouvrir une portion d'extrémité d'une fente de passage dudit écran (12).

5. Store selon la revendication 4, **caractérisé en ce que** ledit enjoliveur (26) coopère avec des moyens de limitation (32) dudit débattement.

6. Store selon l'une quelconque des revendications 1 à 5, **caractérisé en ce que** ledit élément coulissant (15, 16) est relié audit élément central (131) par des moyens de rappel (24).

7. Store selon la revendication 6, **caractérisé en ce que** lesdits moyens de rappel comprennent un ressort spiral (24).

## Claims

1. Motor vehicle blind having a draw bar (13) which is guided in two non-parallel rails (17, 18) and makes it possible to roll up and unroll a screening-off screen (12);
the said draw bar (13) comprising a central element (131) and at least one element (15, 16) that slides in relation to the latter, so as to compensate for the variation in the gap between the said rails (17, 18);
**characterised in that that** end (211) of the said sliding element (15, 16) which is connected to the said central element (131) has a cross-section of surface area which is larger than the rest of the said sliding element (15, 16), in the form of a truncated sphere, which provides a link that forms a ball-joint, so as to allow a travel that compensates for any lack of parallelism between the said sliding element (15, 16) and the said central element (131).

2. Blind according to claim 1, **characterised in that** the said sliding element (15, 16) moves within a housing (31), the cross-section of which is complementary with the said cross-section of the end (211) which is connected to the said central element (131).

3. Blind according to either of claims 1 or 2, **characterised in that** the said end (211) which is connected to the said central element (131) performs the function of a stop in at least one of the extreme sliding positions.

4. Blind according to any of claims 1 to 3, **characterised in that** each of the said sliding elements (15, 16) carries a cover (26) which is intended to mask an end portion of a slot for the passage of the said screen (12).

5. Blind according to claim 4, **characterised in that** the said cover (26) cooperates with means (32) for limiting the said travel.

6. Blind according to any of claims 1 to 5, **characterised in that** the said sliding element (15, 16) is connected to the said central element (131) by return means (24).

7. Blind according to claim 6, **characterised in that** the said return means comprise a spiral spring (24).

## Patentansprüche

1. Rollo für Kraftfahrzeuge, mit einer Zugstange (13), die in zwei nicht parallelen Schienen (17, 18) geführt wird und das Auf- und Abrollen eines Verdunklungsschirms (12) erlaubt,
wobei diese Zugstange (13) ein mittleres Element (131) und mindestens ein Element (15, 16) aufweist, das in Bezug auf Letzteres verschiebbar ist, um die Änderung des Abstands zwischen den Schienen (17, 18) auszugleichen,
**dadurch gekennzeichnet, dass** das Ende (211) des verschiebbaren Elements (15, 16), das mit dem mittleren Element (131) verbunden ist, einen größeren Querschnitt aufweist als der Rest des verschiebbaren Elements (15, 16), kugelstumpfförmig ist und eine kugelgelenkartige Verbindung ausbildet, um eine Schwenkung zum Ausgleich einer eventuell fehlenden Parallelität zwischen dem verschiebbaren Element (15, 16) und dem mittleren Element (131) zuzulassen.

2. Rollo nach Anspruch 1, **dadurch gekennzeichnet, dass** das verschiebbare Element (15, 16) in einer Aufnahme (31) verschoben wird, deren Querschnitt komplementär zum Querschnitt des Endes (211) ist, das mit dem mittleren Element (131) verbunden ist.

3. Rollo nach einem der Ansprüche 1 oder 2, **dadurch gekennzeichnet, dass** das Ende (211), das mit dem mittleren Element (131) verbunden ist, in mindestens einer der Endlagen der Verschiebung eine Anschlagfunktion erfüllt.

4. Rollo nach einem der Ansprüche 1 bis 3, **dadurch gekennzeichnet, dass** jedes der verschiebbaren Elemente (15, 16) eine Zierleiste (26) trägt, die vorgesehen ist, um einen Endabschnitt eines Durchgangsschlitzes für den Schirm (12) zu überdecken.

5. Rollo nach Anspruch 4, **dadurch gekennzeichnet, dass** die Zierleiste (26) mit Mitteln zur Begrenzung der Schwenkbewegung (32) zusammenwirkt.

6. Rollo nach einem der Ansprüche 1 bis 5, **dadurch gekennzeichnet, dass** das verschiebbare Element (15, 16) durch Rückstellmittel (24) mit dem mittleren Element (131) verbunden ist.

7. Rollo nach Anspruch 6, **dadurch gekennzeichnet, dass** die Rückstellmittel eine Spiralfeder (24) aufweisen.
